# EUROPÄISCHE PATENTANMELDUNG

(11) **EP 1 712 199 A2**
(43) Veröffentlichungstag der Anmeldung: **18.10.2006**
(21) Anmeldenummer: 06007629.6
(22) Anmeldetag: 11.04.2006
(51) Int. Cl.: A61C 1/08, A61C 8/00

(54) **Implantations-System für eine sofort belastbare implantologische Versorgung des Kiefers**

(30) Priorität: 11.04.2005 DE 102005016740
(71) Anmelder: Putzer, Philip, Dr., 30419 Hannover (DE)
(72) Erfinder: Putzer, Philip, 30419 Hannover (DE); Henfling, Volker, 37133 Friedland (DE)
(74) Vertreter: Läufer, Martina

(57) **Zusammenfassung**

Das neue Implantations-System ist geeignet für eine sofort belastbare implantologische Versorgung des Kiefers und besitzt folgende Bestandteile:
a) ein Zahnimplantat (20) mit einem Implantatkörper (22) und einem damit fest oder lösbar verbundenen Implantatkopf (24), der als Abutment für eine prothetische Suprakonstruktion verwendbar ist, mit im Wesentlichen quer oder schräg verlaufender durchgehender Bohrung in einem Bereich unterhalb des Implantatkopfes (Fixturbohrung; 80) und mit einem Markierungselement (70a, 70b) für den formschlüssigen Aufsatz eines Bohrschlüssels (60) in Zuordnung zum Eingang der Bohrung;
b) einen Bohrschlüssel (60) zum formschlüssigen Aufsatz auf den Implantatkopf (24) oder den Implantatkörper (22) mit Hilfe eines Markierungselements (70a, 70b) in Zuordnung zum Eingang der Fixturbohrung (80) des Implantats und mit einem Arm (66) mit integrierter Bohrführungshilfe (88) (drill guide), die es ermöglicht, einen Bohrer durch die Bohrführungshilfe (88) des aufgesetzten Bohrschlüssels (60) und passgenau durch die Fixturbohrung (80) des Implantats (20, 22) zu führen,
c) ein Fixturelement (30) für eine zusätzliche Verankerung des Implantats im Kieferknochen, das durch die Fixturbohrung (80) des Implantats so einsetzbar ist, dass es in Anwendungsposition wenigstens einseitig aus diesem herausragt.

## Beschreibung

Die Erfindung betrifft ein Implantations-System für eine sofort belastbare implantologische Versorgung des Kiefers und die Bestandteile dieses Systems, die wenigstens ein Zahnimplantat, einen Bohrschlüssel und ein Fixturelement umfassen.

Die implantatprothetische Versorgung insbesondere vollständig zahnloser und teilweise bereits atrophierter Kiefer ist seit langer Zeit ein Problem.
Der vollständige oder teilweise Verlust von Zähnen führt zu einer generalisierten oder lokalen Atrophie, die durch das Tragen von herausnehmbarem Zahnersatz noch verstärkt wird. Die zahnlose ohnehin mechanisch weniger stabile Oberkieferspange atrophiert zentripedal, verliert unter den unphysiologischen Kaukräften der Prothese an Höhe und Breite und macht nach längerer Zahnlosigkeit die Herstellung einer suffizienten Oberkieferprothese gelegentlich unmöglich. Die Notwendigkeit, bei Totalprothesen künstliche Zähne aus statischen Gründen auf dem atrophierten Kieferkamm aufzustellen, führt zu einer unzureichenden Ästhetik bei allenfalls ausreichender Kaufunktion.

Moderne Methoden der künstlichen Pfeilervermehrung (Zahnimplantate) ermöglichen die Befestigung von Prothesenzähnen trotz ungünstiger anatomischer Gegebenheiten. Der zunehmende Bedarf an Zahnimplantaten bei teilbezahnten und unbezahnten Kieferspangen hat zu einer differenzierten Implantat-Technik für den Unter- und Oberkiefer geführt. In der Regel sind es verschraubte Titananker, deren Design, Oberflächenbeschaffenheit, Materialbeschaffenheit sowie transgingivale und subgingivale Einheiltechniken sich je nach Hersteller unterscheiden, aber grundsätzlich der Befestigung von Zahnersatz dienen. Einzelimplantate sind z.B. grundsätzlich aus der US 2004/0033470 A1, der US 6,234,797 oder auch der DE 103 04 802 A1 bekannt.

Häufig ist die Knochenqualität nicht ausreichend, um einen festen Sitz von Einzelimplantaten zu gewährleisten. Für ausgedehntere Prothesen werden daher verblockte Konstruktionen bevorzugt, bei denen mehrere Implantate starr verbunden werden und sich dadurch gegenseitig stabilisieren.

In jedem Falle wird bei konservativer Behandlungstechnik heute noch die subgingivale Einheilung der Implantate vorgezogen, die einen zweistufigen Prozess mit relativ langer Behandlungsdauer mit sich bringt. Dabei werden zunächst nach Eröffnen des Operationsraumes Implantate in den Kiefer eingebracht und geschlossen (subgingival) über Monate einheilen gelassen. Empfohlen werden 3-6 Monate für Oberkieferimplantate. In einem zweiten Schritt muss ein weiterer operativer Eingriff zur Implantatfreilegung erfolgen. Nach der Abformung der Implantatposition wird eine prothetische Suprakonstruktion gefertigt und im Mund auf den Implantaten befestigt.

Für die provisorische Versorgung des Patienten in der Übergangszeit gibt es verschiedene Möglichkeiten.

Die einfachste prothetische Versorgung eines unbezahnten Patienten nach der Zahnimplantation ist die weichbleibende Unterfütterung. Aufgrund der massiven heilungsbedingten Schrumpfung des Prathesenlagers ist diese Möglichkeit sehr unbefriedigend und kann sogar aufgrund eines erhöhten Prothesendrucks zu Verlagerungen der Implantate führen.

Um dem Patienten während der Einheilphase eine feste, nicht herausnehmbare Versorgung anzubieten, wurden die so genannten "immediate provisorial implants" (IPI) entwickelt, wie in US 6, 655, 962 offenbart. Schmale Implantate werden zwischen den definitiven Implantaten möglichst parallel inseriert und direkt nach der Operation mit Hilfe eines im Dentallabor erstellen Provisoriums mittels Übertragungskappen auf die provisorischen Implantate polymerisiert. Das Einbringen der zusätzlichen, provisorischen Implantate, die bei der endgültigen Versorgung wieder entfernt werden, stellt eine erhebliche Belastung des Patienten und des zur Verfügung stehenden Knochenmaterials dar. Sofern bei stark atrophierten Kiefern nur bestimmte Positionen als Implantatsitz möglich sind, können unter Umständen keine zusätzlichen provisorischen Implantate eingebracht werden.

Zur Vereinfachung der Verfahren und Minimierung der operativen Eingriffe wäre eine Sofortbelastung des bleibenden Implantats bei offener Einheilung erstrebenswert. Die Implantatsofortbelastung wird derzeit selbst bei Versorgung des mechanisch belastbareren Unterkiefers nur unter bestimmten Bedingungen empfohlen, die z.B. relativ gute Knochenquantität und -qualität einschließen. Dies ist jedoch häufig gerade bei älteren Patienten oder bei längerzeitig zahnlosen und dadurch atrophierten Kiefern nicht gegeben. Auch ist die Sofortbelastung des Oberkiefers weit kritischer, da im Allgemeinen ein geringeres Knochenvolumen und spongiöses Knochenmaterial vorliegen. Aus diesem Grund ist die Sofortbelastung von Permanentimplantaten für den Unterkiefer bei günstiger Disposition nicht mehr unüblich, während sie für den Oberkiefer kritisch zu beurteilen wäre, da hier positive Berichte fehlen. Ein gängiges implantologisch-prothetisches Behandlungskonzept für den zahnlosen Unterkiefer gibt Ledermann in "Stegprothetische Versorgung des zahnlosen Unterkiefers mit Hilfe von plasmabeschchteten Titanschraubenimplantaten"; Dtsch. Zahnärzte Z. 1979; 34, 907-9011.

Rechnergestützte Planungssysteme auf der Grundlage bildgebender Verfahren ermöglichen heute eine bessere Ausnutzung des Knochenlagers (siehe z.B.: Heurich, T. et al., "Perfektion in der Implantologie durch computergestützte Implantatplanung und deren operative Umsetzung - Möglichkeiten und Grenzen", Implantologie 2003, 11, 9-26).

Eine solche rechnergestützte Planung wird z.B. bei einem unter dem Slogan "Teeth in an Hour" bekannt gewordenen Implantations-Konzept genutzt (Yildirim, M. et al., "Sofortversorgung des zahnlosen Kiefers: "Teeth in an Hour"", Implantologie 2004, 12, 341-358). Hierbei wird eine virtuelle Planungsumgebung mit einer transgingivalen Insertionstechnik kombiniert. Bei dem Verfahren wird eine vorhandene Prothesenbasis exakt am Schleimhauttegument angepasst. Mit bildgebenden Verfahren wird die Knochensituation und die Schleimhautdicke genau festgestellt. Anzahl, Sitz, Länge und Dicke der Implantate sowie der Abutments sind so vorab genau planbar. Das Ergebnis der Planung wird mit einem Stereolithographieverfahren auf ein Modell für die Prothese übertragen. Zusätzlich wird eine Bohrschablone in Form der Prothesenbasis angefertigt. Am Patienten wird dann innerhalb einer Sitzung die Übertragungsschablone schleimhautgetragen aufgelagert und mit vestibulären Fixierschrauben im Alveolarknochen fixiert. Mit Führungshilfen werden Gingiva und Knochen durchbohrt. Die Implantatinsertion erfolgt transgingival mit einer Einbringhilfe. Nach Entfernung der Bohrschablone wird die verblockte (verbrückte) prothetische Suprakonstruktion aufgesetzt und befestigt. Es ergibt sich eine semipermanente Versorgung, nach Einheilung kann der prothetische Teil ersetzt werden.

Wie der dargestellte Stand der Technik zeigt, werden für sofort belastbare Implantate heute generell voll verblockte Konstruktionen favorisiert, um die auftretenden Kräfte zu verteilen und die Konstruktion insgesamt zu stabilisieren. Ob dies für eine Sofortbelastung im Oberkiefer ausreicht ist offen, da es aufgrund der weicheren Knochenstruktur des Oberkiefers zu stärkeren Mikrobewegungen am Interface (Knochen-Titan-Kontakt) der verblockten Titanschrauben kommt. Man geht heute davon aus, dass der Prozess der Osseointegration sich gegen den Prozess der faserigen Einkapselung nicht durchsetzt, sobald die Mikrobewegungen des Implantats über den kritischen Bereich von 50 bis 150 µm hinausgehen (Pilliar, R., "Quantitative evaluation of the effect of movements at a porous coated implat-bonde interface" in Davies, E. (Ed.), "The Bone-Biomaterial Interface" University of Toronto Press, Toronto 1991, 380-387). Bei mangelhafter Einheilung kann jedoch die gesamte implantatprothetische Konstruktion verloren gehen.

Der Erfindung liegt daher die Aufgabe zugrunde, neue Möglichkeiten für die sofortige prothetische Versorgung von teil- oder unbezahnten Patienten und insbesondere auch für den Zahnersatz im Oberkiefer zur Verfügung zu stellen.

Zur Lösung dieser Aufgabe sieht die Erfindung ein Implantations-System für eine sofort belastbare implantologische Versorgung des Kiefers mit wenigstens folgenden Bestandteilen vor:
a) einem Zahnimplantat mit einem Implantatkörper und einem damit fest oder lösbar verbundenen Implantatkopf, der als Abutment für eine prothetische Suprakonstruktion verwendbar ist, mit im Wesentlichen quer oder schräg verlaufender durchgehender Bohrung in einem Bereich unterhalb des Implantatkopfes (Fixturbohrung) und mit einem Markierungselement für den formschlüssigen Aufsatz eines Bohrschlüssels in Zuordnung zum Eingang der Bohrung;
b) einem Bohrschlüssel zum formschlüssigen Aufsatz auf den Implantatkopf oder den Implantatkörper mit Hilfe eines Markierungselements in Zuordnung zum Eingang der Fixturbohrung des Implantats und mit einem Arm mit integrierter Bohrführungshilfe (drill guide), die es ermöglicht, einen Bohrer durch die Bohrführungshilfe des aufgesetzten Bohrschlüssels und passgenau durch die Fixturbohrung des Implantats zu führen;
c) einem Fixturelement für eine zusätzliche Verankerung des Implantats im Kieferknochen, das durch die Fixturbohrung des Implantats so einsetzbar ist, dass es in Anwendungsposition wenigstens einseitig aus diesem herausragt.

Der Erfindung liegt die Erkenntnis zugrunde, dass eine zusätzliche, interne, einzelne Fixierung der Implantate im Kiefer die Gefahr der Mikrobewegungen weit genug eindämmen kann, um eine Sofortbelastung auch von Oberkieferimplantaten zu ermöglichen. Eine Verblockung der Implantate kann zusätzlich vorgenommen werden. Das System kann auch dazu verwendet werden, in herkömmlicher Weise geschlossen einheilende Zahnimplantate während der sensiblen Osseointegrationsphase vor Belastungen zu schützen. Das System kann auch dazu verwendet werden, allgemein Schraubenimplantate gegen Verdrillen zu sichern und weiter mechanisch zu stabilisieren. Das erfindungsgemäße Implantations-System und dessen Bestandteile sind besonders vorteilhaft bei alters- oder krankheitsbedingter Kieferatrophie und bei Tumorpatienten mit Defektresektionen zur direkten prothetischen Rehabilitation.

Das erfindungsgemäße Implantations-System ermöglicht es weiter, die Implantation durch ein starres Gerüst mit geeigneter Verbindung (Konus oder Gewinde) vorzusehen und hierdurch mehrere Einzelimplantate zu verblocken.

Die direkte primäre Verblockung kann wie üblich und im Stand der Technik bekannt durch ein starres Gerüst erfolgen. Das starre Gerüst kann innerhalb der prothetischen Suprakonstruktion gelegen sein (Verbrückung mittels der Prothese über die Implantat-Köpfe), oder es kann eine Verbundplatte im Bereich des Alveolarfortsatzes vorgesehen werden. Je nach Patientensituation können einzelne Implantate, größere Bereiche oder alle Implantate eines Kiefers verblockt sein. Für eine Gesamtverblockung ist eine hufeisenförmige Konstruktion, d.h. eine hufeisenförmige transgingivale Verbundplatte vorzusehen.

Eine derartige Verbundplatte für das Implantations-System besitzt wenigstens zwei Bohrungen, die für das Durchführen von Zahnimplantaten ausgelegt sind.

Die primär als formstabiles und lastunterstützendes Element der Versorgung dienende Verbundplatte wird dabei in bekannter Weise als individuelle Bohrschablone für die Implantatinsertion im CAD/CAM-Verfahren gefräst sein und dient
a. als Bohrschablone
b: direkt als prothetisches Hilfsteil zur Befestigung von Zahnersatz

Das erfindungsgemäße Zahnimplantat für die Verwendung in dem hier dargestellten Implantations-System besitzt einen bei den üblichen Implantaten im Wesentlichen zylindrischen oder sich zum distalen Ende hin konisch verjüngenden Implantatkörper und einen damit fest oder lösbar verbundenen Implantatkopf, der als Abutment für eine prothetische Suprakonstruktion verwendbar ist. Zur Lösung der Aufgabe der Erfindung zeichnet sich das erfindungsgemäße Zahnimplantat durch eine im Implantatkörper unterhalb des Kopfendes, vorzugsweise im unteren Drittel angeordnete, im Wesentlichen quer oder schräg zur Implantat-Hauptachse verlaufende durchgehende Bohrung (im Folgenden auch "Fixturbohrung" genannt) und durch wenigstens ein Markierungselement in einem nach Insertion zugänglichen Bereich des Implantats in räumlich exakter Zuordnung zum Eingang der Fixturbohrung aus. Grundsätzlich kann jedes beliebige Zahnimplantat so abgewandelt werden, dass es in der erfindungsgemäßen Weise mit dem Fixturelement abgesichert werden kann.

Vorzugsweise handelt es sich bei dem Zahnimplantatkörper um ein Vollschraubenimplantat mit einem äußeren Durchmesser etwa zwischen 3,5 und 5 mm.

Das Markierungselement kann vorzugsweise eine Nut sein oder auch ein Stift oder Steg. Es können mehrere Markierungselemente vorhanden sein.

Gemäß einer bevorzugten Ausführungsform der Erfindung kann sich das Markierungselement an einer Ausnehmung oder Innenbohrung im Implantatkörper befinden, auf die alternativ der als Abutment verwendbare Implantatkopf, ein Zwischenstück für den Aufsatz eines Abutments oder der formschlüssig passende Bohrschlüssel aufsetzbar ist, der seinerseits ein gegengleiches Markierungselement besitzt, d.h. beispielsweise einen Stift oder Steg zum Eingriff in die Nut oder eine Nut, in die ein Stift oder Steg an dem Implantat eingreifen kann.

In alternativen Ausführungsformen kann sich das Markierungselement, z.B. in Form einer Farbmarkierung, entweder außen am Implantathals oder an dem als Abutment verwendbaren Implantatkopf befinden und der formschlüssig passende Bohrschlüssel auf das Abutment aufsteckbar sein.

Die in exakter räumlicher Zuordnung zur Fixturbohrung angebrachte Markierung ist erforderlich, um das Implantat mit der Fixturbohrung zum Mundvorhof des Patienten ausrichten zu können. Da das erfindungsgemäße Fixturelement erst eingebracht wird, wenn das Implantat in den Kiefer des Patienten bereits inseriert wurde, ist die Fixturbohrung im Implantat zu diesem Zeitpunkt für den Operateur nicht mehr zu sehen. Um das Fixturelement dennoch positionieren zu können, also die Fixturbohrung aus vestibulärer Position zu "treffen", wurde ein Bohrschlüssel als "drill guide" entwickelt, der es ermöglicht einen Bohrer von außen exakt auf die Fixturbohrung auszurichten, diesen durch die Bohrung hindurchzuführen und in Verlängerung der Fixturbohrung des Implantats in den Kieferknochen zu bohren, um anschließend hier das Fixturelement einzuführen.

Die Bohrführungshilfe des Bohrschlüssels kann vorzugsweise so ausgebildet sein, dass das Fixturelement direkt durch die Bohrführungshilfe in die Fixturbohrung des Implantats einbringbar ist. Hierfür kann beispielsweise das Fixturelement als ein kopfloses Element, beispielsweise eine mit einem Spezialwerkzeug zu befestigende kopflose Imbusschraube ausgebildet sein.

Nach einem bevorzugten Ausführungsbeispiel kann am Bohrschlüssel an der Position der Bohrführungshilfe eine lösbare Hülse vorgesehen sein, deren Innenweite für die Führung eines Bohrers weitgehend ohne Spiel ausgelegt ist und die in eine Bohrung am Bohrschlüssel einsetzbar ist, die der Führung des Fixtutelements exakt in Richtung der Fixturbohrung dient.

Der Bohrschlüsselarm kann auch mehrteilig ausgebildet sein, wobei dann der untere Teil des Arms mit der Bohrführungshilfe abnehmbar ist. Dieser Teil wird nach dem Bohren abgenommen, damit das Fixturelement dann direkt oder mit Hilfe einer in einem anderen anzusetzenden Unterarm vorhandenen Führungshilfe, i.a. größerer Weite, eingesetzt werden kann.

Der erfindungsgemäße Bohrschlüssel für die Verwendung in dem hier beschriebenen Implantations-System zeichnet sich durch einen bogenförmigen Arm zwischen einem formschlüssig in oder an einem Implantatkopf oder Implantatkörper befestigbaren Bohrschlüsselkopf und einer am entgegengesetzten Ende des Armes integrierten Bohrführungshilfe (drill guide) aus, die die Führung eines Bohrers (Vorbohrers) weitestgehend ohne Spiel entlang einer durch die Bohrhilfe vorgegebenen Bohrachse ermöglicht.

Dabei steht die durch die Bohrführungshilfe vorgegebene Bohrachse quer oder schräg zur Implantat-Hauptachse, auf die der Bohrschlüsselkopf ausgerichtet ist, vorzugsweise in einem Winkel zwischen 20° und 160°, weiter vorzugsweise zwischen 30° und 150°. Die Implantat-Hauptachse und die Bohrachse müssen sich nicht kreuzen, die Winkel beziehen sich dann auf die Projektion der Achsen in einer Ebene. Aufgrund des relativ geringen Durchmessers der üblichen Implantate werden die Achsen sich jedoch im Allgemeinen kreuzen oder annähernd kreuzen. Die mechanische Stabilität soltte bei sich nicht exakt kreuzenden Achsen besser sein.

Vorzugsweise ist der Bohrschlüsselkopf in der Weise ausgebildet, dass er mittels einer formschlüssigen Steckverbindung in oder um den Implantatkörper, den Implantatkopf oder ein mit oder ohne Zwischenstück aufgesetztes Abutment greifend auf ein Implantat aufsetzbar ist, und zwar in Bezug auf den Drehwinkel um die Implantat-Hauptachse in räumlich eindeutiger Position. Zur Festlegung dieser eindeutigen Position in Bezug auf das Implantat ist wenigstens ein Markierungselement vorgesehen, das geeignet ist in ein passendes Markierungsgegenstück am Implantat einzugreifen, z.B. ein Vorsprung oder Steg oder auch eine Nut, wie oben schon beschrieben.

Die Lösung nach der Erfindung umfasst schließlich ein Fixturelement für die zusätzliche und einzelne (interne) Fixtur des Implantats im Knochen des Patienten quer oder schräg zur Implantat-Hauptachse, so dass das Implantat gegen Verdrillen, Verwinden, Kippen und dergleichen gesichert und mechanisch zusätzlich stabilisiert wird. Mikrobewegungen werden hierdurch verhindert oder zumindest deutlich eingeschränkt. Das Fixturelement kann stift-, schrauben- oder nagelförmig sein und ist passgenau durch die im Wesentlichen quer oder schräg verlaufende Bohrung eines Zahnimplantats, die hier als Fixturbohrung bezeichnet wird, einsetzbar.

Die Länge des Elements beträgt vorzugsweise 0,5 bis 3 cm, insbesondere 1 bis 2 cm, der Durchmesser 1 bis 3 mm. Es kann sich um einen Stift oder Nagel handeln, der beispielsweise mit einer friktionsfördemden Oberflächenstruktur versehen sein kann (Eine entsprechende Oberfläche kann innerhalb der Fixturbohrung vorgesehen werden). Derzeit wird eine Ausführung als Schraubennagel, der lediglich an seinem distalen Ende Gewindegänge aufweist, die vorzugsweise schneidende Gewindegänge sind, als besonders bevorzugt angesehen.

Alternativ kann das Fixturelement eine Schraube sein, die entweder ohne Spiel durch die Fixturbohrung des Implantats durchführbar ist oder deren Gewinde passend zu einem Innengewinde der Fixturbohrung des Implantats ausgebildet ist.

Das Fixturelement kann aus den für die zugehörigen Zahnimplantate üblichen Werkstoffen bestehen. In Frage kommen - wie für das Implantat - in erster Linie Titan, Titan-Kunststoffhybride oder Kunststoffkerne mit Titansplitteroberfläche. Günstig wäre ein Fixturelement, das aus einem resorbierbaren Kunststoff besteht und nach ca. 3-4 Monaten durch Stoffwechselvorgänge verdaut wird. Derartige resorbierbare Kunststoffe sind im Stand der Technik bekannt.

Im Weiteren wird die Erfindung anhand von Abbildungen näher veranschaulicht.

### Es zeigen:

- Abb. 1:: eine Anordnung aus acht voll verblockten Implantaten für die Versorgung eines zahnlosen Oberkiefers (schematisch);

- Abb. 2:: ein einzelnes Implantat mit interner Fixtur (schematisch);
- Abb. 3:: ein einzelnes Implantat nach Insertion mit aufgesetztem Bohrschlüssel und durch die Bohrhilfe und die Fixturbohrung geführtem Vorbohrer,
- Abb. 4:: eine Übersicht für ein Implantatsystem mit interner Fixtur;
- Abb. 5:: ein Altemativbeispiel für einen Bohrschlüssel, hier mit Hülse;
- Abb. 6:: ein Alternativbeispiel zu Abb. 4d;
- Abb. 7:: einen Bohrschlüssel mit verschiedenen abnehmbaren Unterarmen;
- Abb. 8:: eine Detailansicht Unterarm mit Bohrführungshilfe.

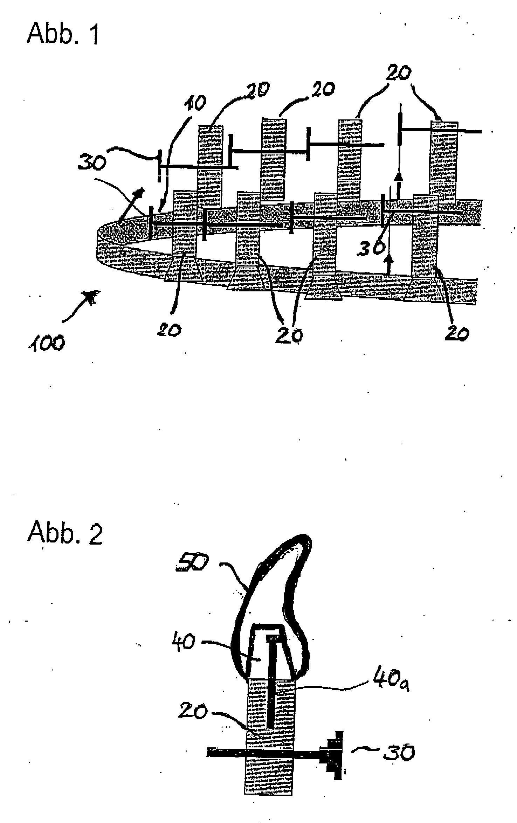

Abbildung 1 zeigt in stark vereinfachter, schematischer Darstellung eine im Ganzen mit 100 bezeichnete Oberkiefer-Implantatversorgung mit einer hufeisenförmig gebogenen (oder gefrästen) Verbundplatte 10 und acht darin verblockten Einzelimplantaten 20, die für die sofortige Belastung vorgesehenen sind. Zu diesem Zweck ist jedes der acht Einzelimplantate 20 mit einem Fixturelement 30 gegen Dreh- und Kippbewegungen zusätzlich gesichert. Für die Anpassung kann die Verbundplatte 10 mit 2 bis 3 Minischrauben zunächst vorfixiert werden (durch Pfeile angedeutet). Anschließend wird kontrolliert, ob die Platte gut passt, und es werden - in diesem Beispiel acht - Vorbohrungen für definitive Implantate 20 gesetzt. Schließlich erfolgt die Insertion der Implantate 20 und die Fixtur durch die Fixturelemente 30.

Abbildung 2 zeigt ebenfalls schematisch ein einzelnes Zahnimplantat 20 mit interner Fixtur durch ein Fixturelement 30, hier einem Schraubennagel mit Kopf sowie einem verschraubbarem (40a) Abutment (40). Die Suprakonstruktion (50) (Krone, Brücke oder Prothese) kann zementiert oder verschraubt sein.

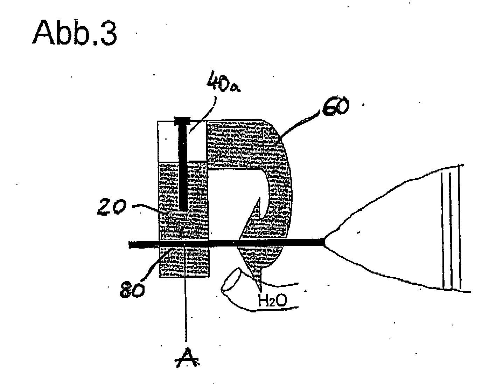

Abbildung 3 zeigt das prinzipielle Vorgehen zur Fixtur mit einem später einzusetzenden Fixturelement in schematischer Skizze. Auf das Implantat 20 ist ein Bohrschlüssel 60 aufgesetzt und mit Hilfe einer Schraube (40a) mit dem Implantat 20 verbunden. Wie in der Skizze durch die pfeilförmige Darstellung des Bohrschlüssels angedeutet, ist der Bohrschlüssel 60 exakt auf die Fixturbohrung 80 im Implantat 20 ausgerichtet, so dass der Vorbohrer A durch die Bohrführungshilfe 88 und die Fixturbohrung 80 durchgeführt werden kann. Während das Implantat in Anwendungsposition im Kiefer des Patienten eingeschraubt ist, reicht der Bohrschlüssel 60 bogenförmig um die Schleimhaut herum, so dass die Bohrführungshilfe 88 im Bohrschlüssel den Vorbohrer automatisch in den vorgefertigten Kanal der Bohrung 80 lenkt. Nach diesem Vorgang wird der Bohrschlüssel 60 abgenommen und das hier nicht dargestellte Fixturelement eingesetzt und, sofern vorhanden, mit den schneidenden Gewindegängen fest angezogen. Danach ist das Implantat 20 wie in den Abbildungen 1 und 2 gezeigt fixiert. Dabei braucht der Winkel zwischen Hauptachse des Implantats 20 und Fixturelement 30 nicht 90° zu betragen, wie hier angedeutet, sondern das Element kann in irgendeiner Weise quer oder schräg zum Implantat eingesetzt werden, wie es aufgrund der Planung als optimal ermittelt wurde.

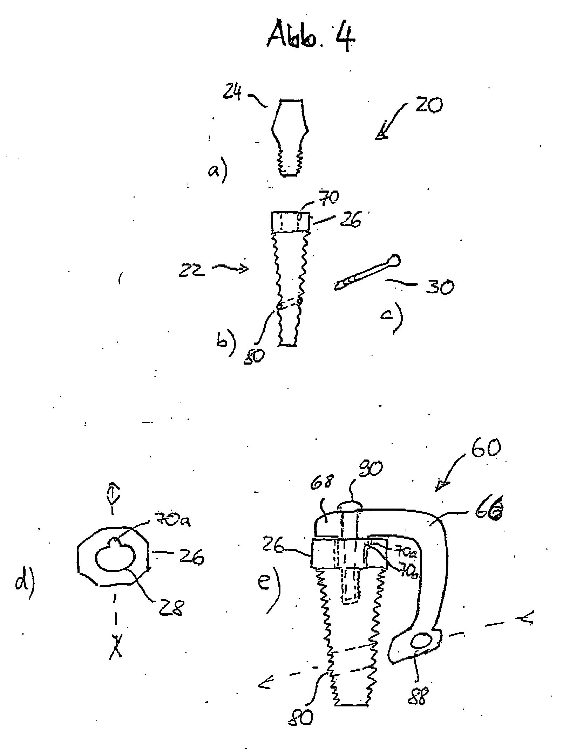

Abb. 4 zeigt ein Ausführungsbeispiel für ein Schraubenimplantat mit interner Fixtur. Das Implantat 20 besteht aus einem sich konisch zum distalen Ende verjüngendem Implantatkörper 22 (Abb. 4b) und einem aufschraubbaren Implantatkopf 24 (Abb. 4a) mit konisch geformtem oberen Ende zum Aufsatz einer Zahneinzelkrone oder einer verbrückten prothetischen Suprakonstruktion. Das in Abb. 4c gezeigte Fixturelement 30 ist hier ein Schraubennagel mit tulpenförmigem Schlitzkopf. Die Länge des Schraubennagels beträgt im Beispiel 1 cm, der Durchmesser 2 mm und muss ggf. nach Vorbohrung intra-op gekürzt werden.

Das obere Ende des Implantatkörpers 22 ist hier sechskantig gestaltet, kann aber vorzugsweise auch rund sein, damit man das Implantat formschlüssig durch die Verbundplatte in den Knochen drehen kann. Der schraubenmutterförmige Ring 26 am oberen Ende des Implantatkörpers 22 dient der besseren Handhabung beim Einschrauben.

Abb. 4d zeigt eine Draufsicht auf den Ring 26. Der Implantatkörper 22 besitzt ein Innengewinde 28 zum Aufschrauben des Kopfes 24. Die Aussparung dieses Innengewindes 26 kann nun genutzt werden, wie Abb. 4e zeigt, um den Bohrschlüssel 60 mit seinem Bohrschlüsselkopf 68 auf den Implantatkörper aufzusetzen. Die genaue Positionierung wird durch die im Implantatring 26 vorhandene Nut 70a sichergestellt, in die ein am Bohrschlüssel angeformter Vorsprung 70b eingreift. Wie in Abb. 4d zu erkennen, markiert die Nut 70a als Markierungselement die Lage des Eingangs der Fixturbohrung 80. Der bogenförmige Arm 66 des Bohrschlüssels 60 bringt daraufhin die Bohrführungshilfe 88 in exakte Ausrichtung mit der Fixturbohrung 80, so dass beide auf einer gemeinsamen Achse liegen, entlang derer der Vorbohrer A geführt werden kann, wie in Abb. 3 gezeigt. Um dem Bohrschlüssel 60 noch festeren Halt zu geben, ist er hier mit einer Schraube 90 fixiert. Nach Abnehmen des Bohrschlüssels 60 wird auf das (inserierte) Implantat (Implantatkörper 22) der Kopf 24 aufgeschraubt und die Fixturschraube 30 wird durch die Fixturbohrung 80 geführt und im Knochen festgeschraubt.

Abb. 5 zeigt ein anderes Ausführungsbeispiel eines Bohrschlüssels 60 (gleiche Bezugszeichen bezeichnen entsprechende Bauteile), bei dem die Bohrführungshilfe 88 sich innerhalb einer herausnehmbaren Hülse 89 befindet. Die Hülse 89 besitzt eine Innenweite von solchen Abmessungen, dass sie als Bohrführungshilfe 88 für den hier nicht dargestellten Bohrer - im Wesentlichen ohne Spiel des Bohrers beim Bohren - ausgelegt ist. Die Hülse selbst ist in eine Bohrung 88a am Bohrschlüssel 60 eingesetzt, die der Führung des Fixturelements 30 exakt in Richtung der Fixturbohrung 80 des Implantats 20 dient. Hierfür wird die Hülse nach dem Bohren von Hand oder mit einem eigens dafür vorgesehenen angepassten Werkzeug entfernt. Die Hülse 89 kann mit einer Madenschraube 90 festgelegt sein. Diese Madenschraube 90 kann wiederum selbst als Hülse ausgebildet sein und für die Zuführung von Spülwasser zum Spülen des Bohrlochs dienen, wenn hierfür an der Hülse 89 eine passende, zusätzliche querverlaufende Gewindebohrung angeordnet ist.

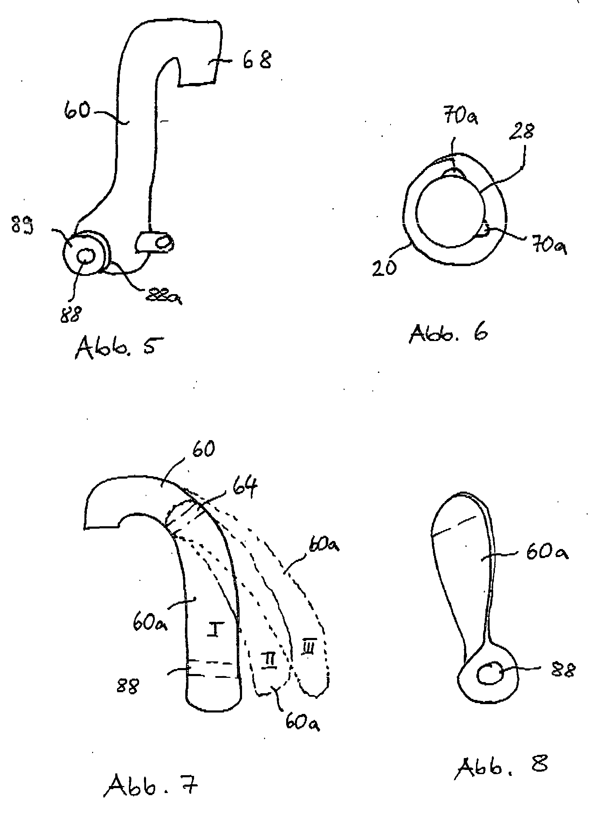

Abb. 6 zeigt ein alternatives Ausführungsbeispiel zu Abb. 4d, wobei am Innengewinde 28 hier zwei Markierungen 70a angeordnet sind, die die eindeutige Positionierung des Bohrschlüssels und ggf. weiterer Hilfsmittel erlauben.

Abb. 7 zeigt ein Ausführungsbeispiel für einen mehrteilig ausgebildeten Bohrschlüsselarm. Am Bohrschlüssel 60 befindet sich ein abnehmbarer Bohrunterarm 60a - wobei drei wahlweise zu verwendende Größen I, II und II angedeutet sind. Der Unterarm kann an Position 64 gewechselt bzw. abgenommen werden (Geschiebe, Riegel, Druckknopf). Nach dem Bohren durch die Bohrhilfe 88 wird der Unterarm - hier 60a - abgenommen und das Fixturelement 30 wird entweder direkt oder durch einen neu angesetzten Unterarm mit weiterer, auf das Fixturelement abgestimmter Bohrung, eingesetzt.

Sowohl die Fixturbohrung 80 als auch die Bohrführungshilfe 88 oder die Führungshilfe 88a für das Fixturelement können mit einer konischen Erweiterung am Eingang versehen sein, um das Einführen des Fixturelements oder des Bohrers zu erleichtem.

Zur weiteren Erleichterung des Bohrens können Spezialbohrer mit Anschlag (Stop-Element) verwendet werden, wobei der Anschlag jeweils so angeordnet ist, dass die Bohrung genau bis in die passende Bohrtiefe erfolgen kann.

## Patentansprüche

1. Implantations-System für eine sofort belastbare implantologische Versorgung des Kiefers mit wenigstens folgenden Bestandteilen:
a) einem Zahnimplantat (20) mit einem Implantatkörper (22) und einem damit fest oder lösbar verbundenen Implantatkopf (24), der als Abutment für eine prothetische Suprakonstruktion verwendbar ist, mit im Wesentlichen quer oder schräg verlaufender durchgehender Bohrung in einem Bereich unterhalb des Implantatkopfes (Fixturbohrung (80)) und mit einem Markierungselement (70; 70a; 70b) für den formschlüssigen Aufsatz eines Bohrschlüssels (60) in Zuordnung zum Eingang der Bohrung;
b) einem Bohrschlüssel (60) zum formschlüssigen Aufsatz auf den Implantatkopf (24) oder den Implantatkörper (22) mit Hilfe eines Markierungselements (70; 70a; 70b) in Zuordnung zum Eingang der Fixturbohrung (80) des Implantats und mit einem Arm (66) mit integrierter Bohrführungshilfe (88) (drill guide), die es ermöglicht, einen Bohrer durch die Bohrführungshilfe (88) des aufgesetzten Bohrschlüssels (60) und passgenau durch die Fixturbohrung (80) des Implantats (20; 22) zu führen,
c) einem Fixturelement (30) für eine zusätzliche Verankerung des lmplantats im Kieferknochen, das durch die Fixturbohrung (80) des Implantats so einsetzbar ist, dass es in Anwendungsposition wenigstens einseitig aus diesem herausragt.

2. Implantations-System nach Anspruch 1, **dadurch gekennzeichnet, dass** der Bohrschlüsselarm (66) mehrteilig ausgebildet ist und der untere Teil des Arms mit der Bohrführungshilfe (88) abnehmbar ist.

3. Implantations-System nach Anspruch 1, **dadurch gekennzeichnet, dass** die Bohrführungshilfe (88) des Bohrschlüssels (60) so ausgebildet ist, dass das Fixturelement (30) durch die Bohrführungshilfe (88) in die Fixturbohrung (80) des Implantats einbringbar ist.

4. Implantations-System nach Anspruch 3, **dadurch gekennzeichnet, dass** hierfür am Bohrschlüssel (60) an der Position der Bohrführungshilfe (88) eine lösbare Hülse (89) vorgesehen ist, deren Innenweite für die Führung eines Bohrers weitgehend ohne Spiel ausgelegt ist und die in eine Bohrung (88a) am Bohrschlüssel (60) einsetzbar ist, die der Führung des Fixturelements (30) exakt in Richtung der Fixturbohrung (80) dient.

5. Implantations-System nach einem der Ansprüche 1 bis 4, **dadurch gekennzeichnet, dass** zusätzlich für mehrere Zahnimplantate eine Verblockung durch ein starres Gerüst, vorzugsweise eine Verbundplatte (10), vorgesehen ist.

6. Implantations-System nach Anspruch 5, **dadurch gekennzeichnet, dass** das Gerüst aus einer Verbundplatte (10) mit wenigstens zwei Bohrungen, die für das Durchführen von Zahnimplantaten ausgelegt sind, besteht.

7. Zahnimplantat (20) für die Verwendung in einem System nach einem der Ansprüche 1 bis 6, mit einem Implantatkörper (22) und einem damit fest oder lösbar verbundenen Implantatkopf (24), der als Abutment für eine prothetische Suprakonstruktion verwendbar ist, **gekennzeichnet durch** eine im Implantatkörper (22) unterhalb des Kopfendes, vorzugsweise im unteren Drittel angeordnete im Wesentlichen quer oder schräg zur Implantat-Hauptachse verlaufende durchgehende Bohrung (80) und **durch** wenigstens ein Markierungselement (70; 70a) in einem nach Insertion zugänglichen Bereich des Implantats in räumlich exakter Zuordnung zum Eingang der Fixturbohrung (80) .

8. Zahnimplantat (20) nach Anspruch 7, **dadurch gekennzeichnet, dass** das Markierungselement (70a) eine Nut ist.

9. Zahnimplantat (20)nach Anspruch 7 oder 8, **dadurch gekennzeichnet, dass** sich das Markierungselement (70; 70a) an einer vorzugsweise konischen oder innenmehrkantförmigen Ausnehmung oder Innenbohrung im Implantatkörper befindet, auf die alternativ der als Abutment verwendbare Implantatkopf (24), ein Zwischenstück für den Aufsatz eines Abutments oder der formschlüssig passende Bohrschlüssel (60) aufsetzbar ist.

10. Zahnimplantat (20) nach Anspruch 7 oder 8, **dadurch gekennzeichnet, dass** das Markierungselement (70; 70a) entweder außen am Implantathals (26) in Form einer Farbmarkierung lokalisiert ist oder sich an dem als Abutment verwendbaren Implantatkopf (24) befindet und der formschlüssig passende Bohrschlüssel (60) auf das Abutment aufsteckbar ist.

11. Bohrschlüssel (60) für die Verwendung in einem System nach einem der Ansprüche 1 bis 6, **gekennzeichnet durch** einen bogenförmigen Arm (66) zwischen einem formschlüssig in oder an einem Implantatkopf (24) oder Implantatkörper (22) befestigbaren Bohrschlüsselkopf (68) und einer am entgegengesetzten Ende des Armes (66) integrierten Bohrführungshilfe (88) (drill guide), die die Führung eines Bohrers weitestgehend ohne Spiel entlang einer **durch** die Bohrhilfe vorgegebenen Bohrachse ermöglicht.

12. Bohrschlüssel (60) nach Anspruch 11, **dadurch gekennzeichnet, dass** die durch die Bohrführungshilte (88) vorgegebene Bohrachse quer oder schräg zur Implantat-Hauptachse steht, auf die der Bohrschlüsselkopf ausgerichtet ist, vorzugsweise in einem Winkel zwischen 20° und 160°, weiter vorzugsweise zwischen 30° und 150°.

13. Bohrschlüssel (60) nach Anspruch 11 oder 12, **dadurch gekennzeichnet, dass** der Bohrschlüsselkopf (68) in der Weise ausgebildet ist, dass er mittels einer formschlüssigen Steckverbindung in oder um den Implantatkörper (22), den Implantatkopf (24) oder ein mit oder ohne Zwischenstück aufgesetztes Abutment greifend auf ein Implantat aufsetzbar ist und zwar in Bezug auf den Drehwinkel um die Implantat-Hauptachse in räumlich eindeutiger Position.

14. Bohrschlüssel (60) nach einem der Ansprüche 11 bis 13, **dadurch gekennzeichnet, dass** der Bohrschlüsselkopf (68) zur Festlegung der eindeutigen Position in Bezug auf das Implantat (20) mit wenigstens einem Markierungselement (70; 70b), vorzugsweise einem Vorsprung, versehen ist, der geeignet ist in ein passendes Markierungsgegenstück am Implantat (20) einzugreifen.

15. Fixturelement (30) für die Verwendung in einem System nach einem der Ansprüche 1 bis 6, **dadurch gekennzeichnet, dass** es stift-, schrauben- oder nagelförmig ist und passgenau durch eine im Wesentlichen quer oder schräg verlaufende Bohrung (80) eines Zahnimplantats einsetzbar ist.

16. Fixturelement (30) nach Anspruch 15, **dadurch gekennzeichnet, dass** die Länge des Elements 0,5 bis 3 cm und/oder der Durchmesser 1 bis 3 mm beträgt.

17. Fixturelement (30) nach Anspruch 15 oder 16, **dadurch gekennzeichnet, dass** es sich a) um einen Stift oder Nagel handelt, der mit einer friktionsfördernden Oberflächenstruktur versehen ist, oder b) um einen Schraubennagel handelt, der lediglich an seinem distalen Ende Gewindegänge aufweist, die vorzugsweise schneidende Gewindegänge sind, oder c) um eine Schraube handelt, die entweder ohne Spiel durch die Fixturbohrung des Implantats durchführbar ist oder deren Gewinde passend zu einem Innengewinde der Fixturbohrung des Implantats ausgebildet ist.

18. Fixturelement (30) nach einem der Ansprüche 15 bis 17, **dadurch gekennzeichnet, dass** es aus Titan oder einem resorbierbaren Material besteht, das vorzugsweise nach ca. drei Monaten desintegriert wird.
